# EUROPEAN PATENT APPLICATION

(11) **EP 2 204 417 A2**
(43) Date of publication of application: **07.07.2010**
(21) Application number: 09180867.5
(22) Date of filing: 29.12.2009
(51) Int. Cl.: C08L 67/04

(54) **Polylactic acid resin composition and molded product using the same**

(30) Priority: 30.12.2008 KR 20080137224
(71) Applicant: Cheil Industries Inc., Kumi-city, Kyungsangbuk-do (KR)
(72) Inventor: Chung, Young-Mi, Gyeonggi-do (KR); Ha, Doo-Han, Gyeonggi-do (KR); Jung, Chang-Do, Gyeonggi-do (KR)
(74) Representative: Bublak, Wolfgang

(57) **Abstract**

Disclosed are a polylactic acid resin composition that (A) about 10 to about 80 wt% of a polylactic acid resin; (B) about 5 to about 50 wt% of a rubber modified vinyl-based graft copolymer; (C) about 10 to about 80 wt% of a vinyl-based copolymer; and (D) about 5 to about 75 wt% of poly(meth)acrylic acid alkyl ester, and a molded product made using the same.

## Description

This disclosure relates to a polylactic acid resin composition and a molded product made using the same.

There has been much research on development of strong and safe polymer materials for special purposes. However, as discarded polymers have been socially recognized as a severe environmental problem all over the world, development of an environmentally- friendly polymer material is required.

Environmentally friendly polymers may be mainly classified into photodegradable polymers and biodegradable polymers. The biodegradable polymer has a functional group that can be decomposed by microorganisms in a main chain. Among these polymers, an aliphatic polyester polymer has gained the most attention, since it has excellent workability and easily adjustable decomposition characteristics. In particular, polylactic acid (PLA) has a market share of about 150,000 tons in the world and expansively covers the field where common plastic is used, for example in food packing materials and containers, cases for electronics, and the like. At present, a polylactic acid resin is mainly used for disposable products such as food containers, wraps, films, and the like due to the biodegradable characteristic. This polylactic acid resin is manufactured by American NatureWorks LLC., Japanese Toyota and the like.

However, since a conventional polylactic acid resin lacks formability, mechanical strength, and heat resistance, a thin film made therefrom can be easily destroyed. Since it has low resistance against high temperatures, a molded product made therefrom can be distorted at about 60°C or higher. Japanese Patent Laid-Open Publication No. 2005-220177, 2005-200517 and 2005-336220 disclose technologies that simultaneously improve heat resistance and mechanical strength by adding glass fiber to a resin composition. However, the resin composition does not have a stable molding workability and has a weak impact strength or poor hydrolysis resistance.

Also, there is a method for increasing heat resistance by using a composition including a polylactic acid resin and an acrylonitrile-butadiene-styrene (ABS) resin. The styrene-based thermoplastic resin such as the acrylonitrile-butadiene-styrene resin has excellent impact resistance, mechanical strength, surface characteristic, and workability, and thus it is widely used for electrical/electronic products, automobile interior/exterior parts, and general merchandise. In particular, maleimide-based ABS is reinforced with heat resistance and molding property, it is usefully used for diverse automobile interior/exterior materials requiring heat resistance. Japanese Patent Laid-Open Publication No. 1999-279380 and 2006-070224 disclose technologies using a composition including polylactic acid resin and acrylonitrile-butadiene-styrene resin. However, these resin compositions do not have excellent appearance characteristic or gloss.

In addition, International Patent Publication No. W0 2005/123831 and Japanese Patent Laid-Open Publication No. 2005-171204 disclose compositions prepared by mixing a polylactic acid resin with a polymethylmethacrylate resin to improve the transparency and molding property of polylactic acid resin. However, the resin compositions do not have excellent impact resistance.

It is the object of the present invention to provide a polylactic acid resin composition having excellent hydrolysis resistance, appearance characteristics, gloss, and impact resistance.

Furthermore, the present invention provides a molded product obtainable from the polylactic acid resin composition.

Above object has been achieved by the provision of a polylactic acid resin composition is provided that includes (A) about 10 to about 80 wt% of a polylactic acid resin; (B) about 5 to about 50 wt% of a rubber modified vinyl-based graft copolymer; (C) about 10 to about 80 wt% of a vinyl-based copolymer; and (D) about 5 to about 75 wt% of poly(meth)acrylic acid alkyl ester.

The rubber modified vinyl-based graft copolymer (B) may include about 5 to about 95 wt% of a vinyl-based polymer including about 50 to about 95 wt% a first vinyl-based monomer selected from an aromatic vinyl monomer, an acryl-based monomer, or a combination thereof; and about 5 to about 50 wt% of a second vinyl-based monomer selected from an unsaturated nitrile monomer, an acryl-based monomer being different kinds from the acryl-based monomer, or a combination thereof, which are grafted onto about 5 to about 95 wt% of a rubber polymer selected from a butadiene rubber, an acryl rubber, an ethylene/propylene rubber, a styrene/butadiene rubber, an acrylonitrile/butadiene rubber, an isoprene rubber, an ethylene-propylene-diene terpolymer, a po lyorgano silo x-ane/polyalkyl(meth)acrylate rubber composite, or a combination thereof.

The vinyl-based copolymer (C) may include a copolymer of about 40 to about 95 wt% of a first vinyl-based monomer selected from an aromatic vinyl monomer, an acryl-based monomer, a heterocyclic monomer, or a combination thereof; and about 5 to about 60 wt% of a second vinyl-based monomer selected from unsaturated nitrile monomer, an acryl-based monomer being different kinds from the acryl-based monomer, a heterocyclic monomer being different kinds from the heterocyclic monomer, or a combination thereof.

The poly(meth)acrylic acid alkyl ester (D) is derived from (meth)acrylic acid alkyl ester monomer represented by the following Chemical Formula 1, and has a weight average molecular weight of about 10,000 to about 500,000 g/mol.

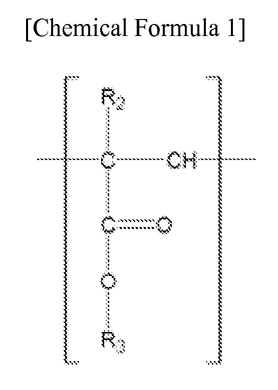

In the above Chemical Formula 1,
R₂ is hydrogen or methyl, and
R₃ is a substituted or unsubstituted C1 to C8 alkyl.

The polylactic acid resin composition may further include (E) about 0.01 to about 20 parts by weight of an impact-reinforcing agent based on about 100 parts by weight of the polylactic acid resin composition, and the impact-reinforcing agent (E) includes one selected from a core-shell type copolymer, a polyester-based copolymer or a polyolefin-based copolymer, or combination thereof.

The core-shell type copolymer includes a copolymer including an unsaturated compound grafted into a rubber polymer. The unsaturated compound is selected from the group consisting of an acryl-based monomer, a heterocyclic monomer, an aromatic vinyl monomer, an unsaturated nitrile monomer, and a combination thereof, and the rubber polymer obtained polymerization of a monomer selected from the group consisting of a diene-based monomer, an acryl-based monomer, a silicon-based monomer, and a combination thereof. The polyester-based copolymer or polyolefin-based copolymer is a copolymer including an epoxy group or anhydride functional group grafted on to a polyester or polyolefin main chain.

Another aspect of this disclosure, a molded product made using the polylactic acid resin composition is provided.

Hereinafter, further aspects of the present invention will be described in detail.

Exemplary embodiments will hereinafter be described in detail. However, these embodiments are only exemplary, and the present invention is not limited thereto.

As used herein, when specific definition is not provided, the term "alkyl" refers to a C1 to C8 alkyl.

As used herein, when specific definition is not provided, the term "different kinds" refers to monomers different from each other.

As used herein, when specific definition is not provided, the term "heterocyclic monomer" refers to a cyclic compound monomer including a heteroatom of N, O, S, or P.

As used herein, when specific definition is not provided, the term "substituted" refers to one substituted with a substituent of a halogen (F, C1, Br, I), a hydroxy, a C1 to C20 alkoxy, a C1 to C20 alkyl, a C2 to C16 alkynyl, a C6 to C20 aryl, a C7 to C13 an arylalkyl, a C1 to C4 oxyalkyl, a C1 to C20 heteroalkyl, a C3 to C20 heteroarylalkyl, a C3 to C20 cycloalkyl, a C3 to C15 cycloalkenyl, a C6 to C15 cycloalkynyl, a C2 to C20 heterocycloalkyl, or a combination thereof.

In the present specification, when a specific definition is not otherwise provided, the term "hetero" refers to one including one or more hydrogen atoms substituted with oxygen, sulfur, nitrogen, phosphorus, or a combination thereof.

The polylactic acid resin composition includes includes (A) about 10 to about 80 wt% of a polylactic acid resin; (B) about 5 to about 50 wt% of a rubber modified vinyl-based graft copolymer; (C) about 10 to about 80 wt% of a vinyl-based copolymer; and (D) about 5 to about 75 wt% of poly(meth)acrylic acid alkyl ester.

Exemplary components included in the polylactic acid resin composition according to embodiments will hereinafter be described in detail. However, these embodiments are only exemplary, and this disclosure is not limited thereto.

### (A) Polylactic acid (PLA) resin

In general, a polylactic acid resin is a commercially-available polyester-based resin made of lactic acid obtained by decomposing corn starch of biomass energy as a monomer.

The polylactic acid resin includes a repeating unit derived from a lactic acid selected from the group consisting of an L-lactic acid, a D-lactic acid, an L,D-lactic acid, and a combination thereof.

The polylactic acid resin may include a repeating unit derived from an L-lactic acid in an amount of about 95 wt% or more in terms of balance between heat resistance and formability. In one embodiment, the polylactic acid resin may include a repeating unit derived from an L-lactic acid in an amount of about 80 wt% or more and the repeating unit derived from a D-lactic acid in an amount of about 0 to about 20 wt%. In one embodiment, the polylactic acid resin may include the repeating unit derived from an L-lactic acid in an amount of about 85 to about 99.99 wt% and the repeating unit derived from a D-lactic acid in an amount of about 0.01 to about 15 wt%. When the polylactic acid resin is included as above, excellent hydrolysis resistance as well as balance between heat resistance and formability may be obtained.

In addition, the polylactic acid resin has no specific limit of molecular weight or molecular weight distribution, as long as it can be molded. However, in one embodiment, the polylactic acid resin has a weight average molecular weight of more than about 80,000 g/mol, and in another embodiment, about 90,000 to about 500,000 g/mol. When the polylactic acid resin has a weight average molecular weight of the above range, it is possible to induce a phase stability and balanced dispersion along with a resin blended together by increasing the viscosity of the polylactic acid resin to a predetermined level.

Also, when a D-polylactic acid (PDLA) resin having a weight average molecular weight of about 10,000 g/mol is used, a stereo complex may be efficiently formed along with L-polylactic acid (PLLA) resin. Herein, the D-polylactic acid (PDLA) resin is a resin including a repeating unit induced from D-lactic acid in an amount of more than about 95 wt%, and the L-polylactic acid (PLLA) resin is a resin including a repeating unit induced from L-lactic acid in an amount of more than about 95 wt%.

The polylactic acid resin includes one selected from the group consisting of a polylactic acid homopolymer, a polylactic acid copolymer, and a combination thereof.

The polylactic acid homopolymer may be prepared through ring-opening polymerization of a lactic acid of the L-lactic acid, the D-lactic acid, or a combination thereof.

The polylactic acid copolymer may be a random or block copolymer with a component that is capable of being copolymerized with the polylactic acid polymer. The component that is capable of being copolymerized with the polylactic acid polymer may include a compound having at least two functional groups being capable of ester-bonding inside the molecule.

The compound having at least two functional groups capable of ester-bonding inside the molecule includes (i) a dicarboxylic acid, (ii) polyhydric alcohols, (iii) a hydroxy carboxylic acid excluding lactic acid, (iv ) a lactone, (v) a polyester, a polyether, a polycarbonate, and the like, which are derived from the above compound.

The dicarboxylic acid (i) includes a C4 to C50 linear or branched saturated or unsaturated aliphatic dicarboxylic acid, a C8 to C20 aromatic dicarboxylic acid, a polyether dicarboxylic acid, and the like.

Herein, the aliphatic dicarboxylic acid may include succinic acid, adipic acid, sebacin acid, decane dicarboxylic acid, and the like. The aromatic dicarboxylic acid may include phthalic acid, terephthalic acid, isophthalic acid, and the like. The polyether dicarboxylic acid may include a carboxyl methyl group at both ends of a polyalkylene ether such as polyethylene glycol, polypropylene glycol, polybutylene glycol, polyethylene polypropylene glycol, and the like.

The polyhydric alcohol (ii) includes aliphatic polyols, aromatic polyhydric alcohols, polyalkylene ethers, and the like.

Aliphatic polyols include C2 to C50 aliphatic polyols including 2 to 4 hydroxy groups such as butane diol, hexane diol, octane diol, decane diol, 1,4-cyclohexanedimetanol, glycerine, sorbitan, trimethylolpropane, neopentyl glycol, and the like, may be used.

In addition, the aromatic polyhydric alcohols may include C6 to C20 aromatic diols such as bis-hydroxy methyl benzene, hydroquinone, and the like, and aromatic diols prepared by additionally reacting a C2 to C4 alkylene oxide such as ethylene oxide, propylene oxide, butylene oxide, and the like with bisphenols such as bisphenol A, bisphenol F, or the like.

The polyalkylene ethers may include ether glycols such as polyethylene glycol, polypropylene glycol, and the like.

The hydroxy carboxylic acid (iii) excluding lactic acid may include a C3 to C 10 hydroxy carboxylic acid such as glycolic acid, hydroxy butyl carboxylic acid, 6-hydroxy caproic acid, and the like.

Examples of the lactone (iv) include glycolide, ε-caprolactone glycolide, ε-caprolactone, β-propinolactone, δ-butyrolactone, β-butyrolactone, γ-butyrolactone, δ-valerolactone, and the like.

For the polyester, polyether, or polycarbonate (v), a generally used one for preparing a lactic acid copolymer may be used without limitation, and in one embodiment, polyester may be used.

The polyester may include an aliphatic polyester prepared from an aliphatic dicarboxylic acid and an aliphatic diol.

The aliphatic dicarboxylic acid may include succinic acid, adipic acid, sebacin acid, decanedicarboxylic acid, and the like. The aliphatic diol may include a C2 to C20 aliphatic diol such as ethylene glycol, propane diol, butane diol, hexane diol, octane diol, and the like, a polyalkylene ether (homopolymer or copolymer) such as polyethylene glycol, polypropylene glycol, polybutylene glycol, and the like, and polyalkylene carbonate and the like.

The polylactic acid resin may be included in an amount of about 10 to about 80 wt% based on the polylactic acid resin composition. In one embodiment, it may be included in an amount of about 20 to about 50 wt% based on the polylactic acid resin composition. When the polylactic acid resin is included within the above range, an appropriate amount of biomass may be obtained and a balance between appearance and impact resistance may be obtained.

### (B) Rubber modified vinyl-based graft copolymer

The rubber modified vinyl-based graft copolymer is a copolymer of about 5 to about 95 wt% of a vinyl-based polymer grafted onto about 5 to about 95 wt% of a rubber polymer.

The vinyl-based polymer includes about 50 to about 95 wt% a first vinyl-based monomer selected from the group consisting of an aromatic vinyl monomer, an acryl-based monomer, and a combination thereof, and about 5 to about 50 wt% of a second vinyl-based monomer selected from the group consisting of an unsaturated nitrile monomer, an acryl-based monomer being different kinds from the acryl-based monomer, and a combination thereof

The aromatic vinyl monomer may include styrene, C1 to C10 alkyl substituted styrene, halogen substituted styrene, or a combination thereof. The alkyl substituted styrene includes o-ethyl styrene, m-ethyl styrene, p-ethyl styrene, α-methyl styrene, and the like.

The acryl-based monomer may include (meth)acrylic acid alkyl ester, (meth)acrylic acid ester, or a combination thereof. The alkyl refers to a C1 to C 10 alkyl. The (meth)acrylic acid alkyl ester includes methyl(meth)acrylate, ethyl(meth)acrylate, propyl(meth)acrylate, butyl(meth)acrylate, and the like, and in one embodiment, methyl(meth)acrylate is preferable. The (meth)acrylic acid ester includes (meth)acrylate, and the like.

The unsaturated nitrile monomer includes acrylonitrile, methacrylonitrile, ethacrylonitrile, or a combination thereof.

The rubber polymer includes a butadiene rubber, an acryl rubber, an ethylene/propylene rubber, a styrene/butadiene rubber, an acrylonitrile/butadiene rubber, an isoprene rubber, an ethylene-propylene-diene terpolymer (EPDM) rubber, a polyorganosiloxane/polyalkyl(meth)acrylate rubber composite, or a combination thereof.

When the rubber modified vinyl-based graft copolymer is prepared, the particle diameter of a rubber particle may range from about 0.05 µm to about 4µm in order to improve impact resistance and the surface characteristic of a molded product. When the particle diameter of the rubber particle falls in the above range, excellent impact strength may be acquired.

The rubber modified vinyl-based graft copolymer may be used alone or in the form of a mixture of more than 2 kinds of rubber modified vinyl-based graft copolymers.

One example of the rubber modified vinyl-based graft copolymer is a polymer of styrene, acrylonitrile, and selectively methyl(meth)acrylate graft-copolymerized onto a butadiene rubber, an acryl rubber, or a styrene/butadiene rubber.

Another example of the rubber modified vinyl-based graft copolymer is methyl(meth)acrylate graft-copolymerized onto a butadiene rubber, an acryl rubber, or a styrene/butadiene rubber.

A method for preparing the rubber modified vinyl-based graft copolymer is widely known to those skilled in the art, and any method among emulsion polymerization, suspension polymerization, solution polymerization, and massive polymerization may be used. In particular, there is a method of performing an emulsion polymerization or massive polymerization by adding the above-described aromatic vinyl monomer in the presence of a rubber polymer and using a polymerization initiator.

The rubber modified vinyl-based graft copolymer may be included in an amount ranging from about 5 wt% to about 50 wt% based on the total amount of the polylactic acid resin, in one embodiment, in an amount ranging from about 10 wt% to about 30 wt%. When the rubber modified vinyl-based graft copolymer is included within the range, excellent appearance characteristic and impact resistance of a polylactic acid resin composition may be simultaneously acquired.

### (C) Vinyl-based copolymer

The vinyl-based copolymer (C) may include a copolymer of about 40 to about 95 wt% of a first vinyl-based monomer selected from an aromatic vinyl monomer, an acryl-based monomer, a heterocyclic monomer, or a combination thereof; and about 5 to about 60 wt% of a second vinyl-based monomer selected from unsaturated nitrile monomer, an acryl-based monomer being different kinds from the acryl-based monomer, a heterocyclic monomer being different kinds from the heterocyclic monomer, or a combination thereof. When the vinyl-based copolymer is prepared in the above content ratio, thermochromic property and chemical resistance may be improved.

The aromatic vinyl monomer may include styrene, C1 to C10 alkyl substituted styrene, halogen substituted styrene, or a combination thereof. The alkyl substituted styrene includes o-ethyl styrene, m-ethyl styrene, p-ethyl styrene, α-methyl styrene, and the like.

The acryl-based monomer may include (meth)acrylic acid alkyl ester, (meth)acrylic acid ester, or a combination thereof. The alkyl refers to a C1 to C 10 alkyl. The (meth)acrylic acid alkyl ester includes methyl(meth)acrylate, ethyl(meth)acrylate, propyl(meth)acrylate, butyl(meth)acrylate, and the like, and in one embodiment, methyl(meth)acrylate is preferable. The (meth)acrylic acid ester includes (meth)acrylate, and the like.

The heterocyclic monomer includes maleic anhydride, alkyl or phenyl N-substituted maleimide, and the like.

The unsaturated nitrile monomer includes acrylonitrile, methacrylonitrile, ethacrylonitrile, or a combination thereof.

The vinyl-based copolymer may be generated as a byproduct while the rubber modified vinyl-based graft copolymer is prepared. In particular, it may be generated more when an excessive amount of vinyl-based polymer is grafted into a small amount of a rubber polymer or when a chain transfer agent, which is used as a molecular weight controlling agent, is used in an excessive amount.

The vinyl-based copolymer may include a copolymer of styrene, acrylonitrile, and selectively methylmethacrylate; a copolymer of α-methylstyrene, acrylonitrile, and selectively methylmethacrylater; or a copolymer of styrene, α-methylstyrene, acrylonitrile, and selectively methylmethacrylate.

The vinyl-based copolymer may be prepared through an emulsion polymerization, a suspension polymerization, a solution polymerization or a massive polymerization, and the vinyl-based copolymer which is used may have a weight average molecular weight ranging from about 15,000 g/mol to about 400,000 g/mol.

Also, another example of the vinyl-based copolymer may be a copolymer formed of methylmethacrylate and selectively methylacrylate. The vinyl-based copolymer may be prepared through an emulsion polymerization, a suspension polymerization, a solution polymerization or a massive polymerization, and the vinyl-based copolymer which is used may have a weight average molecular weight ranging from about 20,000 g/mol to about 250,000 g/mol.

Another example of the vinyl-based copolymer is a copolymer of styrene and maleic anhydride, which may be prepared through a continuous massive polymerization or solution polymerization. The composition ratio of the styrene and the maleic anhydride may vary within a wide range. In one embodiment, the maleic anhydride may be included in an amount ranging from about 5 wt% to about 50 wt% based on the total amount of the vinyl-based copolymer. The copolymer of styrene and maleic anhydride which is used may have a weight average molecular weight of a wide range. In one embodiment, a copolymer of styrene and maleic anhydride having a weight average molecular weight of about 20,000 g/mol to about 200,000 g/mol and an inherent viscosity of about 0.3 dl/g to about 0.9 dl/g may be used.

The vinyl-based copolymer may be included in an amount ranging from about 10 wt% to about 80 wt% based on the total amount of the polylactic acid resin composition. In one embodiment, the vinyl-based copolymer may be included in an amount ranging from about 10 wt% to about 30 wt%. When the vinyl-based copolymer is included in an amount of the above range, a balance between excellent appearance characteristic and impact resistance may be achieved.

### (D) Poly(meth)acrylic acid alkyl ester

The poly(meth)acrylic acid alkyl ester is induced from (meth)acrylic acid alkyl ester monomer represented by the following Chemical Formula 1. The poly(meth)acrylic acid alkyl ester may be acquired by polymerizing the (meth)acrylic acid alkyl ester monomer through a massive polymerization, an emulsion polymerization, a suspension polymerization or a solution polymerization.

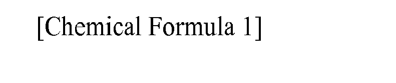

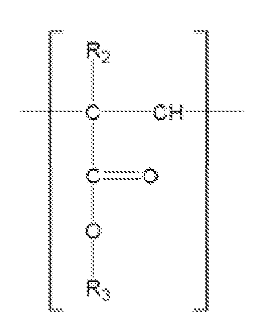

In the above Chemical Formula 1,
R₂ is hydrogen or methyl, and
R₃ is a substituted or unsubstituted C1 to C8 alkyl.

The (meth)acrylic acid alkyl ester monomer includes methacrylic acid methyl ester, methacrylic acid ethyl ester, methacrylic acid propyl ester, acrylic acid methyl ester, acrylic acid ethyl ester, and the like, and in one embodiment, methacrylic acid methyl ester is preferable.

The poly(meth)acrylic acid alkyl ester has a weight average molecular weight of about 10,000 g/mol to about 500,000 g/mol, and in one embodiment, about 15,000 g/mol to about 350,000 g/mol. When a poly(meth)acrylic acid alkyl ester having a weight average molecular weight of the above range is used, flow balance of the polylactic acid resin composition is achieved and thus the phase may be more stabilized.

The poly(meth)acrylic acid alkyl ester may be included in an amount ranging from about 5 wt% to about 75 wt% based on the total amount of the polylactic acid resin composition. In one embodiment, the poly(meth)acrylic acid alkyl ester may be included in an amount ranging from about 5 wt% to about 30 wt%. When the poly(meth)acrylic acid alkyl ester is included in an amount of the above range, excellent gloss, impact strength and dimensional stability may be acquired.

### (E) Impact-reinforcing agent

The polylactic acid resin composition may further include an impact-reinforcing agent to improve impact strength.

The impact-reinforcing agent includes a core-shell type copolymer, a polyester-based copolymer or polyolefin-based copolymer, or a combination thereof.

The core-shell type copolymer has a core-shell structure where unsaturated monomers are grafted into a rubber core to form a hard shell. The core-shell type copolymer obtained by grafting a unsaturated compound of an acryl-based monomer, a heterocyclic monomer, an aromatic vinyl monomer, an unsaturated nitrile monomer, or a combination thereof, onto a rubber polymer obtaining by polymerization of a diene-based monomer, an acryl-based monomer, a silicon-based monomer, or a combination thereof.

The diene-based monomer includes C4 to C6 butadiene, isoprene, and the like. In one embodiment, butadiene is preferable. The rubber polymer that is obtained from polymerization of the diene-based monomer includes a butadiene rubber, an acryl rubber, a styrene/butadiene rubber, an acrylonitrile/butadiene rubber, an isoprene rubber, a terpolymer (EPDM) of ethylene-propylene-diene, and the like.

The acryl-based monomer includes methyl(meth)acrylate, ethyl(meth)acrylate, n-propyl(meth)acrylate, n-butyl(meth)acrylate, hexyl(meth)acrylate, 2-ethylhexyl(meth)acrylate, and the like. Curing agents such as ethyleneglycol di(meth)acrylate, propyleneglycol di(meth)acrylate, 1,3-butyleneglycol di(meth)acrylate, 1,4-butyleneglycol di(meth)acrylate, allyl(meth)acrylate, triallylcyanurate, and the like may be used along with the acryl-based monomer.

The silicon-based monomer includes a cyclosiloxane compound of hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, or a combination thereof. Curing agents such as trimethoxymethylsilane, triethoxyphenylsilane, tetramethoxysilane, tetraethoxysilane, and the like may be used along with the silicon-based monomer.

The rubber polymer has an average particle diameter ranging from about 0.4 µm to about 1µm in terms of balance of impact resistance and coloring properties.

The acryl-based monomer of the unsaturated compound may include (meth)acrylic acid alkyl ester, (meth)acrylic acid ester, or a combination thereof. The alkyl is a C1 to C10 alkyl. The (meth)acrylic acid alkyl ester includes methyl(meth)acrylate, ethyl(meth)acrylate, propyl(meth)acrylate, butyl(meth)acrylate, and the like, and in one embodiment, methyl(meth)acrylate is preferable. The (meth)acrylic acid ester includes (meth)acrylate, and the like.

The heterocyclic monomer may include maleic anhydride, alkyl or phenyl N-substituted maleimide, and the like.

The aromatic vinyl monomer includes styrene, C1-C10 alkyl-substituted styrene, halogen-substituted styrene, or a combination thereof. The alkyl substituted styrene includes o-ethyl styrene, m-ethyl styrene, p-ethyl styrene, α-methyl styrene, and the like.

The unsaturated nitrile monomer includes acrylonitrile, methacrylonitrile, ethacrylonitrile, or a combination thereof.

An example of a polymer formed from at least one monomer among the unsaturated compounds is polymethylmethacrylate.

The core-shell type copolymer may have an average particle size of about 0.1 µm to about 0.5 µm When the core-shell type copolymer has an average particle size of the above range, the polylactic acid resin is dispersed so well in a matrix that when an impact is applied from the exterior, the impact is easily absorbed to thereby increase the impact-reinforcing effect.

The core-shell type copolymer may include about 50 wt% to about 95 wt% of the rubber polymer and about 5 wt% to about 50 wt% of an unsaturated compound grafted thereinto. When the core-shell type copolymer has the above content ratio, the compatibility with a polylactic acid resin is excellent so that the impact-reinforcing effect may be maximized.

The polyester-based copolymer or polyolefin-based copolymer is a copolymer including an epoxy group or anhydride functional group grafted on to a polyester or polyolefin main chain.

The polyolefin-based main chain may be obtained by polymerization of a monomer such as ethylene, propylene, butylene, isobutylene, and the like.

The polyester-based copolymer or polyolefin-based copolymer can be prepared by using a Ziegler-Natta catalyst, which is an olefin polymerization catalyst, or a methallocene-based catalyst for a more selective structure.

The impact-reinforcing agent may be included in an amount ranging from about 0.01 to 20 parts by weight based on 100 parts by weight of the polylactic acid resin composition. In one embodiment, the impact-reinforcing agent may be included in an amount ranging from about 5 to about 20 parts by weight. When the impact-reinforcing agent is included in an amount of the above range, the impact-reinforcing effect and the heat resistance may be increased maximally, and the fluidity is improved as well so that injection molding property may be improved.

### (F) Other Additive

The polylactic acid resin composition may further include an additive of an antioxidant, a release agent, a weather-resistance agent, a colorant, an ultraviolet (UV) blocking agent, a filler, a nucleating agent, a plasticizer, a flame retardant, or a combination thereof according to each use.

The antioxidants may include phenol-type, phosphite-type, thioether-type, or amine-type antioxidants. The releasing agents may include a fluorine-containing polymer, silicone oil, a metal salt of stearic acid, a metal salt of montanic acid, a montanic acid ester wax, or a polyethylene wax. In addition, the weather-resistance agent may include benzophenone- type or an amine-type weather-resistance agent. The colorant may include a dye or a pigment. The ultraviolet (UV) blocking agent may include titanium oxide (TiO₂) or carbon black. The filler may include a glass fiber, a carbon fiber, silica, mica, alumina, clay, calcium carbonate, calcium sulfate, or glass beads. When the fillers are added, properties such as mechanical strength, heat resistance, and the like may be improved. In addition, the nucleating agents may include talc or clay. The plasticizer includes a polyester-based plasticizer, a glycerine-based plasticizer, a phosphoric acid ester plasticizer, a polyalkylene glycol-based plasticizer, an epoxy-based plasticizer, and the like. The flame retardant includes a bromine-based flame retardant, a phosphorus-based flame retardant, an antimony-containing compound, a melamine compound, and the like.

The additive may be included properly as long as the additive does not inhibit the physical properties of the polylactic acid resin composition. In one embodiment, the additive may be included in an amount ranging from about 0.1 to about 30 parts by weight based on 100 parts by weight of the polylactic acid resin composition.

The polylactic acid resin composition according to one embodiment may be prepared through a widely known method for preparing a resin composition. For example, the polylactic acid resin composition may be prepared in the form of pellets or chips through a conventional method, such as mixing the above component with other additives and then performing a melt-extrusion in an extruder.

The polylactic acid resin composition according to one embodiment has a three-phase structure of polylactic acid resin/rubber modified vinyl-based graft copolymer/poly(meth)acrylic acid alkyl ester by adding the poly(meth)acrylic acid alkyl ester not as a compatibilizer but as one of resins. Thus, the appearance characteristic, gloss, and impact strength of the polylactic acid resin composition are improved and also, it may further include an impact-reinforcing agent to enhance the impact strength further more.

According to another embodiment, a molding product is manufactured by molding the polylactic acid resin composition, which is described above.

Any suitable molding technique known in the art may be used, such as but not limited to extrusion molding, injection molding, blow molding and the like. The skilled artisan will understand how to prepare a molded product using the polylactic acid resin composition of the invention without undue experimentation.

The polylactic acid resin composition may be usefully applied to the manufacturing of molding products of an area requiring excellent appearance characteristic, gloss and impact strength, for example, automobile, mechanical parts, electrical/electronic parts, office equipment such as a computer, and other general merchandise. In particular, the polylactic acid resin composition may be usefully applied to the housings of electrical/electronic products, such as television, computer, printer, laundry machine, cassette player, stereo, mobile phone and so forth.

The following examples illustrate this disclosure in more detail. However, the following are exemplary embodiments and are not limiting.

### [Examples]

Each component of polylactic acid resin composition is as follows.
(A) Polylactic acid resin
   4032D produced by NatureWorks LLC., U.S. is used.
(B) Rubber Modified Vinyl-Based Graft Copolymer
   An ABS graft copolymer is prepared by adding butadiene rubber latex in such a manner that the amount of butadiene is about 58 parts by weight based on 100 parts by weight of the total amount of a monomer, adding necessary additives, which include about 1.0 parts by weight of oleic acid potassium (auxiliary initiator), about 0.4 parts by weight of cumenehydroperoxide (initiator), and about 0.3 parts by weight of t-dodecyl mercaptan(chain-transfer agent), to a mixture of about 31 parts by weight of styrene, about 11 parts by weight of acrylonitrile, and about 150 parts by weight of deionized water, causing a reaction for about 5 hours while maintaining a temperature of about 75°C. A power-type rubber modified vinyl-based graft copolymer resin of a core-shell structure having an average particle diameter of about 0.3 µm is prepared by adding about 1% sulfuric acid solution to the produced polymer latex, solidifying the mixture solution, and drying it.
(C) Vinyl-based Copolymer
   A SAN copolymer resin is prepared by adding about 0.17 parts by weight of azobisisobutyronitrile, about 0.4 parts by weight of t-dodecyl mercaptan and about 0.5 parts by weight of tricalciumphosphate to a mixture of about 21 parts by weight of styrene, about 79 parts by weight of methacrylic acid, about 5 parts by weight of acrylonitrile, and about 120 parts by weight of deionized water, and the resultant solution is suspension-polymerized for about 5 hours at a temperature of about 75°C. The SAN copolymer resin is rinsed, dehydrated and dried to thereby produce a powder-type m-SAN copolymer resin.
(D) Poly(meth)acrylic acid alkyl ester
   As for polymethylmethacrylate, IH-830 produced by LG company is used.
(E) Impact-Reinforcing Agent
   223-A(methyl methacrylate-butadiene ethylacrylate copolymer) produced by MRC company is used.
(F) Dicarboxylic anhydride
   As Comparative Example, EXXELOR VA 1803 (maleic anhydride grafted ethylene propylene rubber) produced by EXXON Chemical company is used.

### Examples 1 to 8 and Comparative Examples 1 to 5

A polylactic acid resin composition may be prepared by mixing the components according to the contents presented in the following Table 1, and manufacturing pellets by performing an extrusion in a two-axis extruder at a temperature ranging from about 200 to about 230°C. The content unit for the components shown in the following Table 1 is wt%.

**Table 1**

| | Examples | | | | | | | | Comparative Examples | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| (A) polylactic acid resin | 40 | 40 | 40 | 50 | 30 | 40 | 40 | 40 | 40 | 40 | 30 | 30 | 50 |
| (B) rubber modified vinyl-based graft copolymer | 20 | 20 | 20 | 20 | 20 | 15 | 10 | 25 | 20 | - | 15 | 20 | - |
| (C) vinyl-based copolymer | 10 | 20 | 30 | 10 | 20 | 10 | 10 | 10 | 35 | - | 50 | 20 | 25 |
| (D) poly(meth)acrylic acid alkyl ester | 25 | 15 | 5 | 15 | 25 | 25 | 25 | 25 | - | 55 | - | 25 | - |
| (E) impact-reinforcing agent | 5 | 5 | 5 | 5 | 5 | 10 | 15 | - | 5 | 5 | 5 | - | 25 |
| (F) dicarboxylic anhydride | - | - | - | - | - | - | - | - | - | - | - | 5 | - |

### [Assessment of Physical Property]

Specimens for physical property tests are prepared by drying the pellets manufactured according to Examples 1 to 8 and Comparative Examples 1 to 5 are dried for about 4 hours at about 80°C, setting an injection molding machine with an injection capability of about 6 oz at a cylinder temperature of about 220°C, metal molding temperature of about 60°C and a molding cycle of about 30 seconds, and injection-molding the pellets with the injection molding machine into ASTM dumb-bell specimens.

The physical properties of the produced physical specimens are measured in the following methods, and the measurement results are shown in the following Table 2.
1) Tensile strength: measured according to ASTM D638.
2) Flexural strength: measured according to ASTM D790.
3) Flexural modulus: measured according to ASTM D790.
4) IZOD impact strength: measured according to ASTM D256 (specimen thickness 1/8").
5) Gloss: measured according to ASTM D523 (incident light: 60°)
6) Flow mark: Pin-point 2T specimens are injection-molded and observed with bare eyes.
   ○: Flow mark is observed.
   ×: Flow mark is not observed.

**Table 2**

| | Examples | | | | | | | | Comparative Examples | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| Tensile strength (kgf/cm2) | 520 | 470 | 420 | 540 | 500 | 500 | 480 | 510 | 400 | 620 | 380 | 420 | 450 |
| Flexural strength (kgf/cm²) | 770 | 701 | 680 | 790 | 730 | 760 | 730 | 740 | 640 | 850 | 635 | 690 | 710 |
| Flexural modulus (kgf/cm²) | 27,120 | 23,266 | 21,430 | 28,016 | 25,640 | 26,010 | 24,890 | 26,450 | 19,840 | 29,600 | 19,040 | 21,610 | 23,100 |
| Impact strength (kgf·cm/cm) | 31 | 28 | 26 | 25 | 28 | 29 | 25 | 29 | 18 | 6 | 15 | 4 | 15 |
| Gloss (%) | 81 | 79 | 75 | 79 | 80 | 79 | 76 | 82 | 65 | 82 | 69 | 59 | 65 |
| Flow mark | × | × | × | × | × | × | × | × | ○ | × | ○ | ○ | × |

It may be seen from Tables 1 and 2, the resin compositions prepared according to Examples 1 to 8 using polylactic acid resin, a rubber modified vinyl-based graft copolymer, vinyl-based copolymer and poly(meth)acrylic acid alkyl ester have excellent impact strength, appearance characteristic, and glass.

Also, although the resin composition of Example 5 includes a smaller amount of polylactic acid resin than that of Example 1, there is not much difference in terms of physical properties. Therefore, it may be concluded that the resin composition of Example 1 including a greater amount of polylactic acid, which is a plant-originated resin, is more excellent resin composition than that of Example 5.

Also, the resin compositions of Examples 2 and 3 including a smaller amount of poly(meth)acrylic acid alkyl ester than the resin composition of Example 1 have lower gloss and impact strength than the resin composition of Example 1.

Also, the resin composition of Example 4 including the greatest amount of polylactic acid has a slightly lower impact strength than the resin composition of Example 1, but it has generally excellent physical properties and appearance. It is inferred that the impact-reinforcing agent has an increased impact strength as grafted methylmethacrylate is selectively collected toward polylactic acid resin and poly(meth)acrylic acid alkyl ester phase.

The resin compositions of Examples 6 and 7 include rubber whose content is brought to about 25 parts by weight by sequentially increasing the content of the impact-reinforcing agent by 5 wt% compared with the resin composition of Example 1 while relatively decreasing the content of the rubber modified vinyl-based graft copolymer. In this case, the resin compositions of Examples 6 and 7 have physical properties and gloss that are slightly lower than the resin composition of Example 1.

Meanwhile, the resin composition of Example 8 includes the rubber modified vinyl-based graft copolymer whose content is increased without using any impact-reinforcing agent. The resin composition of Example 8 is excellent in terms of appearance characteristic and physical properties, except that the impact strength of the resin composition is slightly decreased compared with the resin composition of Example 1.

In particular, the resin composition of Comparative Example 5, which includes the impact-reinforcing agent replacing the entire amount of the rubber modified vinyl-based graft copolymer, has a drastic deterioration in the impact strength and gloss. Therefore, it may be seen that the amount of the impact-reinforcing agent needs to be controlled.

The resin composition of Comparative Example 1 includes vinyl-based copolymer resin replacing the entire amount of poly(meth)acrylic acid alkyl ester. In this case, the gloss and impact strength are drastically deteriorated. Therefore, it may be concluded that adding poly(meth)acrylic acid alkyl ester is essential to improve the appearance characteristic.

Meanwhile, the resin composition of Comparative Example 2, which includes poly(meth)acrylic acid alkyl ester replacing the total amount of the rubber modified vinyl-based graft copolymer and the vinyl-based copolymer resin, has an excellent appearance characteristic but its impact strength is drastically deteriorated. It may be seen from these results that the appearance characteristic, gloss, and impact strength may be balanced when a resin composition includes all the three components, which are the rubber modified vinyl-based graft copolymer, the vinyl-based copolymer and the poly(meth)acrylic acid alkyl ester.

Also, the resin composition of Comparative Example 4, which includes polymethylmethacrylate as a compatibilizer and dicarboxylic anhydride added thereto, shows flow marks and remarkably deteriorated gloss. As a result, the resin composition of Comparative Example 4 has poor appearance characteristic.

To sum up, a three-phase structure of polylactic acid resin/rubber modified vinyl-based graft copolymer/poly(meth)acrylic acid alkyl ester is acquired by adding poly(meth)acrylic acid alkyl ester to the polylactic acid resin composition not as a compatibilizer but as a background resin, and thus the polylactic acid resin composition may have an improved appearance characteristic, gloss, and impact strength. Furthermore, the polylactic acid resin composition may have its impact strength even more improved by selectively further including an impact-reinforcing agent.

While this disclosure has been described in connection with what is presently considered to be practical exemplary embodiments, it is to be understood that this disclosure is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

This application claims priority to and the benefit of Korean Patent Application No. 10-2008-0137224 filed in the Korean Intellectual Property Office on December 30, 2008, the entire content of which is incorporated herein by reference.

## Claims

1. A polylactic acid resin composition comprising:
(A) about 10 to about 80 wt% of a polylactic acid resin;
(B) about 5 to about 50 wt% of a rubber modified vinyl-based graft copolymer;
(C) about 10 to about 80 wt% of a vinyl-based copolymer; and
(D) about 5 to about 75 wt% of poly(meth)acrylic acid alkyl ester

2. The polylactic acid resin composition of claim 1, wherein the rubber modified vinyl-based graft copolymer (B) comprises
about 5 to about 95 wt% of a vinyl-based polymer comprising about 50 to about 95 wt% of a first vinyl-based monomer selected from an aromatic vinyl monomer, an acryl-based monomer, or a combination thereof; and about 5 to about 50 wt% of a second vinyl-based monomer selected from an unsaturated nitrile monomer, an acryl-based monomer being different kinds from the acryl-based monomer, or a combination thereof,
which are grafted onto about 5 to about 95 wt% of a rubber polymer selected from a butadiene rubber, an acryl rubber, an ethylene/propylene rubber, a styrene/butadiene rubber, an acrylonitrile/butadiene rubber, an isoprene rubber, an ethylene-propylene-diene terpolymer, a polyorganosiloxane/polyalkyl(meth)acrylate rubber composite, or a combination thereof.

3. The polylactic acid resin composition of claim 1 or 2, wherein the vinyl-based copolymer (C) comprises a copolymer of about 40 to about 95 wt% of a first vinyl-based monomer selected from an aromatic vinyl monomer, an acryl-based monomer, a heterocyclic monomer, or a combination thereof; and about 5 to about 60 wt% of a second vinyl-based monomer selected from unsaturated nitrile monomer, an acryl-based monomer being different kinds from the acryl-based monomer, a heterocyclic monomer being different kinds from the heterocyclic monomer, or a combination thereof.

4. The polylactic acid resin composition of any of claims 1 to 3,
wherein the poly(meth)acrylic acid alkyl ester (D) is derived from (meth)acrylic acid alkyl ester monomer represented by the following Chemical Formula 1: 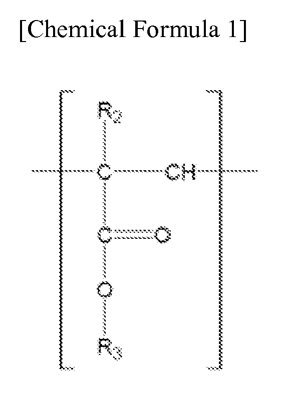 wherein in the above Chemical Formula 1, R₂ is hydrogen or methyl, and
R₃ is a substituted or unsubstituted C1 to C8 alkyl.

5. The polylactic acid resin composition of any of claims 1 to 4,
wherein the poly(meth)acrylic acid alkyl ester (D) has a weight average molecular weight of about 10,000 to about 500,000 g/mol.

6. The polylactic acid resin composition of any of claims 1 to 5,
wherein the polylactic acid resin composition includes about 0.01 to about 20 parts by weight of an (E) impact-reinforcing agent based on about 100 parts by weight of the polylactic acid resin composition.

7. The polylactic acid resin composition of claim 6, wherein the impact-reinforcing agent (E) comprises a core-shell type copolymer, a polyester-based copolymer, a polyolefin-based copolymer, or a combination thereof.

8. The polylactic acid resin composition of claim 7, wherein the core-shell type copolymer comprises a copolymer including an unsaturated compound grafted on to a rubber polymer,
wherein the unsaturated compound is selected from an acryl-based monomer, a heterocyclic monomer, an aromatic vinyl monomer, an unsaturated nitrile monomer, or a combination thereof, and the rubber polymer obtained polymerization of a monomer selected from a diene-based monomer, an acryl-based monomer, a silicon-based monomer, or a combination thereof.

9. The polylactic acid resin composition of claim 7, wherein the polyester-based copolymer or polyolefin-based copolymer is a copolymer including an epoxy group or anhydride functional group grafted on to a polyester or polyolefin main chain.

10. A molded product obtainable from the polylactic acid
resin composition according to any one of claims 1 to 9.
